# EUROPEAN PATENT SPECIFICATION

(11) **EP 3 136 878 B1**
(45) Date of publication and mention of the grant of the patent: **02.08.2017**
(21) Application number: 15702460.5
(22) Date of filing: 02.02.2015
(51) Int. Cl.: A23L 29/206, A23L 19/00

(54) **PREPARATIONS OF PLANT PARENCHYMAL CELL WALL CLUSTERS**
ZUBEREITUNGEN PFLANZLICHER PARENCHYMATÖSER ZELLWAND-CLUSTER
PRÉPARATIONS CONSTITUÉES DE GRAPPES DE PAROIS DE CELLULES PARENCHYMATEUSES

(30) Priority: 28.02.2014 EP 14157223
(43) Date of publication of application: 08.03.2017
(73) Proprietor: Unilever NV, 3013 AL Rotterdam (NL); Unilever PLC, London, Greater London EC4Y 0DY (GB)
(72) Inventor: VAN DER HIJDEN, Hendrikus Theodorus Wilhelmus Maria, NL-3133 AT Vlaardingen (NL); KHALLOUFI, Seddik, NL-3133 AT Vlaardingen (NL); NIJSSE, Jacob, NL-3133 AT Vlaardingen (NL)
(74) Representative: van den Brom, Coenraad Richard
(86) International application number: PCT/EP2015/052045
(87) International publication number: WO 2015/128155

(56) References cited:
- EP-A1- 2 002 732
- EP-A2- 0 295 865
- WO-A1-2008/062057
- WO-A2-2004/044285

## Description

### Field of the invention

The present invention relates to preparations of plant parenchymal cell wall clusters, instant dry food products comprising such preparations, a method for preparing a food product using said preparations and the use of said preparations as a structurant in instant dry food products.

### Background of the invention

Organoleptic properties are the aspects of food as experienced by the senses, including taste, sight, sound, smell and touch. These properties play an important role in how consumers perceive a food product. For example, consumers expect a gazpacho type soup to have a thick, pulpy consistency and may perceive a 'thin' or 'runny' gazpacho type soup with a lack of pulpiness as being of lower quality.

The use of instant dry food products to prepare ready-to-eat food products is well-known and appreciated for ease of use and convenience for both savory and sweet food products. Examples include instant soup, gravy and sauce powders, as well as desserts like instant pudding and sweet sauces. The prepared ready-to-eat food products may be intended to be eaten cold - like for example gazpacho, or hot - like for example a savory sauce or soup.

To get the textural properties required in prepared ready-to-eat food products like soups and sauces the instant dry food product may contain structuring ingredients like thickening agents. The thickening agent will usually be added in a dry and/or dehydrated form to keep the water content and/or water activity (Aw) of the instant dry food product at the required levels for microbiological safety. Speed and ease of rehydration of an instant dry food product and more specifically of the thickening agent used are important product attributes. Some thickening agents may require intensive shear, for example vigorous stirring or even mechanical mixing, and/or high temperatures, for example using hot water or heating, to properly rehydrate and allow the thickening agent to act as a structurant.

Some thickening agents like for example microfibrilated cellulose (MFC) cannot be dried without losing at least part of their structuring properties and may require additives to maintain at least part of their ability to structure. For example, US 4,481,076 discloses redispersible MFC that is prepared by the addition to a liquid dispersion of the MFC, of an additive compound capable of substantially inhibiting hydrogen bonding between the cellulose fibrils, wherein the additive is a polyhydroxy compound. The MFC, upon drying, is characterized by having a viscosity when redispersed in water of at least 50% of the viscosity of an equivalent concentration of the original dispersion. WO 2010/102802 discloses a method for drying MFC comprising applying a composition comprising MFC and at least one liquid onto a surface that is sufficiently cold to at least partially freeze said composition wherein said surface has a temperature that is not more than 150 K below the melting point of the at least one liquid. WO 2008/062057 describes the use of a composition comprising dried citrus fruit pulp fibre as a thickener for e.g. instant soup powder.

An often used thickening agent is starch. Starch is readily available and over the years many chemically modified starches with improved thickening properties have become available. However, some consumers may prefer not to have, or at least to limit the amount and/or number of, chemically modified ingredients in their foods. Furthermore, (native) starches may require extensive shear to prevent lump formation and/or need to be cooked-up (gelatinization) to act as a thickening agent when used in an instant dry food product upon preparation of the ready-to-eat food product. In addition, starch may negatively influence the taste and/or appearance of the prepared ready-to eat food product.

US 4,477,481 discloses a method for preparing a dry citrus pulp material comprising the step of raising the pH of the wet pulp material to a pH of at least 4,0 and thereafter freeze drying the pH adjusted pulp and comminuting the freeze dried pulp. US 4,477,481 further discloses that it was found that freeze drying of untreated pulp does not result in dried material which is suitable for use in powdered beverages mixes as the layer of pulp material collapses during the freeze drying cycle.

There is still a need for alternative and/or improved structurants that can be used in instant dry food products. Such structurants preferably should impart a thickening effect to the ready-to-eat prepared food product and preferably impart pulpiness. Furthermore, such structurants should preferably quickly rehydrate without the need of excessive mechanical energy and/or heat. Such structurants should preferably not be chemically modified and/or not require additives to improve their rehydration, more specifically improve the speed of rehydration, and/or structuring behavior.

### Summary of the invention

It was surprisingly found that a preparation of plant parenchymal cell wall clusters provides for an alternative and/or improved structurant that can be used in instant dry food products.

Accordingly the present invention relates to a preparation of plant parenchymal cell wall clusters, the cell wall clusters comprising at least 60 wt% of cell wall derived polysaccharides, the cell wall clusters having a
a. volumetric mass density of at least 0.1 gram/ml;
b. S_{BET} of at least 3 m²/gram; and
c. rehydrated particle size having a d(0.1) value higher than 20 micrometer and a d(0.9) value lower than 1500 micrometer;
wherein the preparation comprises up to 20 wt% of water and has a water activity (Aw) of less than 0.5.

The invention further relates to an instant dry food product comprising the preparation of the invention, wherein the instant dry food product comprises up to 20 wt% of water and has a water activity (Aw) of less than 0.5.

The invention still further relates to a method for preparing a food product comprising combining the instant dry food product of the invention with water, wherein the water has a temperature of at least 0, preferably between 5 and 100, more preferably between 10 and 80 and even more preferably between 15 and 60 degrees Celsius.

The invention also relates to the use of the preparation of plant parenchymal cell wall clusters of the invention as a structurant in instant dry food products.

### Detailed description of the invention

Weight percentage (wt%) is calculated on the total weight of the composition unless otherwise stated. Room temperature is a temperature of about 20 degrees Celsius. All ranges identified herein are meant to include all ranges subsumed therein if, for example, reference to the same is not explicitly made. It should be noted that in specifying any range of concentration or amount, any particular upper concentration can be associated with any particular lower concentration or amount. Except in the operating and comparative examples, or where otherwise explicitly indicated, all numbers in this description indicating amounts of material ought to be understood as modified by the word "about".

The cell wall clusters of the preparation of the invention have a
a. volumetric mass density of at least 0.1 gram/ml;
b. S_{BET} of at least 3 m²/gram; and
c. rehydrated particle size having a d(0.1) value higher than 20 micrometer and a d(0.9) value lower than 1500 micrometer.

It was surprisingly found that such cell wall clusters easily rehydrate when combined with water and do not require excessive stirring or mechanical mixing to achieve the same. It was further found that such rehydration can be achieved over a broad temperature range. Even though for certain food applications higher temperatures may be preferred, the preparation of the invention can be rehydrated in cold water, like for example water with a temperature in the range of 0 to 15 degrees Celsius, warm water, like for example water with a temperature in the range of 15 to 60 degrees Celsius, and hot water, like for example water with a temperature in the range of 60 to 100 degrees Celsius.

### Edible preparation

The preparation of the invention is an edible preparation, that is to say, the preparation is suitable for human consumption. The edible preparation thus consists of food grade ingredients. Such ingredients may be of natural origin, nature identical, naturally derived or chemically derived. Preferably at least part and more preferably all ingredients are of natural origin, nature identical or naturally derived. Preferably the preparation only consists of food grade ingredients of natural origin. For the purpose of the invention 'naturally derived' means that the ingredient is of 'natural origin' but has subsequently been chemically modified. 'Natural origin' specifically excludes ingredients that are modified by chemical means, but can include physical modification processes and natural modification processes like fermentation.

### Dry format

The preparation of the invention comprises up to 20 wt% of water and has a water activity (A_{W}) of less than 0.5. That is to say that the preparation is in a dry format as suitably known in the area of food ingredients.

Preferably, the preparation comprises up to 18, more preferably up to 15 and still more preferably up to 12 wt% of water. Preferably, the preparation has a water activity (Aw) of less than 0.45, preferably less than 0.4 and more preferably less than 0.35.

A dry format is convenient to use as it is for example less susceptible for microbiological spoilage and/or easily mixed with other dry ingredients used to make an instant dry food product.

### Plant parenchymal cell wall cluster

The preparation according to the invention is a preparation of plant parenchymal cell wall clusters. A cluster is defined as comprising at least one plant parenchymal cell. The plant parenchymal cell can be a cell with a complete and intact cell wall ('intact plant parenchymal cell wall'), i.e. the cell wall is intact; or a cell of which only a part of the cell wall remains ('plant parenchymal cell wall fragment'), i.e. the cell wall is not intact in that for example part of the cell wall is missing or holes are present in the cell wall. A cluster can thus consist of only one or more than one plant parenchymal cell, like for example 1, 5, 10, 20, 40, 80, 125, 250 or 500.

The number of plant parenchymal cells in a cluster (N) can suitably be calculated by taking the volume of the cluster (V) and the average distance of the center of a cell to the center of the neighboring cells (d). The number of cells is then calculated using N = V/(d*d*d). Alternatively the number of cells can be counted using micro X-ray computed tomography (G. van Dalen, "A study of Bubbles in Foods by X-Ray Microtomography and Image Analysis", Microscopy and Analysis, pp:S8-S12, 2012), after critical point drying suitably known to the skilled person. In hydrated systems, the number of cells can be counted using synchrotron radiation tomography (H.K. Mebatsion, P. Verboven, A.M. Endalew, J. Billen, Q.T. Ho, B.M. Nicolai A novel method for 3-D microstructure modeling of pome fruit tissue using synchrotron radiation tomography images. J. Food Eng., 93 (2009), pp. 141-148).

The plant parenchymal cell wall clusters can be of natural origin, nature identical, naturally derived or chemically derived. Preferably at least part and more preferably all plant parenchymal cell wall clusters are of natural origin, nature identical or naturally derived. Preferably the plant parenchymal cell wall clusters only consists of food grade ingredients of natural origin.

The plant parenchymal cell wall clusters can have any shape, including spherical, cubic, rod-like, elongated and lamellar.

The plant parenchymal cell wall clusters have a rehydrated particle size having a d(0.1) value higher than 20 micrometer and a d(0.9) value lower than 1500 micrometer. The rehydrated particle size is defined as the particle measured with the method 'Particle size of rehydrated material' described herein below.

Preferably, the cell wall clusters have a rehydrated particle size having a d(0.1) value higher than 30, more preferably higher than 40,even more preferably higher than 50 and still even more preferably higher than 70 micrometer.

Preferably, the cell wall clusters have a rehydrated particle size having a d(0.9) value lower than 1400, more preferably lower than 1200, even more preferably lower than 1000, still more preferably lower than 800 and still even more preferably lower than 500 micrometer.

Preferred cell wall clusters have a rehydrated particle size with a d(0.1) value higher than 30 micrometer and a d(0.9) value lower than 1400 micrometer, like for example a d(0.1) value higher than 40 micrometer and a d(0.9) value lower than 1000 micrometer or a d(0.1) value higher than 50 micrometer and a d(0.9) value lower than 500 micrometer.

Thus, the rehydrated particle size is the size of the cell wall cluster as present in a prepared ready-to-eat food product, that is, after rehydration of the preparation of plant parenchymal cell wall clusters of the invention.

### Middle lamella

In plant tissue plant cells are hold together by the so-called 'middle lamella'. Middle lamella is a pectin layer that cements the cell walls of two adjoining cells together. Plants need this to give them stability and so that they can form plasmodesmata between the cells. It is the first formed layer that is deposited at the time of cytokinesis. The cell plate that is formed during cell division itself develops into middle lamella or lamellum. The middle lamella is made up of calcium and magnesium pectates. In plants, the pectins form a unified and continuous layer between adjacent cells. When middle lamella dissolves, the cells get isolated from each other. If enzymes degrade the middle lamella, the adjacent cells will separate.

It will be understood that a cell wall cluster of the invention is thus a unit of one or more plant parenchymal cells that are held together by the middle lamella. Such clusters can be identified as individual units of one or more plant parenchymal cells after rehydration in the prepared ready-to-eat food product.

### Plant parenchymal cells

The source of the plant parenchymal cells may be any plant that contains plant parenchymal cells having a cellulose skeleton. A plant cell wall contains cellulose and hemicellulose, pectin and in many cases lignin. This contrasts with the cell walls of fungi (which are made of chitin), and of bacteria, which are made of peptidoglycan. Primary plant cell walls contain lignin only in minor amounts, if at all. The cell wall of the plant parenchymal cells of the preparation according to the present invention can comprise some lignin, like less than 10 wt% calculated on total amount of cell wall material, but preferably do not contain substantial amounts of lignified tissue.

Preferably the cell wall of the plant cells consist essentially of non-lignified tissue as understood by the skilled person in the area of plant biology.

A plant cell wall contains a framework of cellulose microfibrils. These microfibrils form a dense and irregular network having small pores between the microfibrils. The microfibrils consist of a multitude of aligned cellulose macromolecules that are oriented to form a microfibril. These microfibrils have a diameter of between 1 and 10 nanometer, more in particular between 2 and 5 nanometer.

The plant cells can be sourced from various parenchymous tissues. Preferred sources are apple cells, onion cells, leek cells, pear cells, peach cells, pumpkin cells, as well as cells from other plants from the Allium genus in the Alliaceae family of plants, potato cells, carrot cells, sugar beet cells, tomato cells and citrus fruit cells. The plant material can be fresh or dried. Also other non-lignified tissues could be used to make a preparation according to the invention, but preferably, the plant parenchymal cell wall clusters are obtained from apple, onion, leek, pear, peach, pumpkin, potato, carrot, sugar beet, tomato, citrus or combinations thereof. Apple, carrot and sugar beet are preferred with apple being especially preferred as it is readily available.

The cell wall clusters of the invention comprise at least 60 wt% of cell wall derived polysaccharides, that is to say that at least 60 wt% of the polysaccharides present in the cell wall clusters is to be found in the cell walls of the plant parenchymal cells that make up the clusters. So, for example, other polysaccharides may be added to the preparation, but the amount of added polysaccharides should be less than 40 wt%. Preferably the cell wall clusters of the invention comprise at least 70, more preferably 80 and even more preferably 90 wt% of cell wall derived polysaccharides.

### Specific surface area

The cell wall clusters of the present invention have a S_{BET} of at least 3 m²/gram. The S_{BET} is determined according to the method 'Standard Specific Surface Area Measurement (S_{BET})' described herein below.

Preferably the cell wall clusters have a S_{BET} of at least 4, more preferably at least 6, even more preferably at least 10 and still even more preferably at least 20 m²/gram.

Preferably the cell wall clusters have a S_{BET} of at most 3000, more preferably at most 1000, even more preferably at most 100 and still even more preferably at most 50 m2/gram.

### Volumetric mass density

The cell wall clusters of the present invention have a volumetric mass density of at least 0.1 gram/ml. The volumetric mass density is determined according to the method 'Volumetric Mass Density' described herein below.

Preferably the cell wall clusters have a volumetric mass density of at least 0.2, more preferably at least 0.3, even more preferably at least 0.4 and still even more preferably at least 0.5 gram/ml.

### Making the preparation

The preparation of plant parenchymal cell wall clusters of the invention easily rehydrate when combined with water and do not require excessive stirring or mechanical mixing to achieve the same.

In contrast, dried plant parenchymal cell wall material known in the art does not show such rehydration characteristics. Such known materials include for example materials that have been dried with techniques well known in the food industry like for example air drying, drum drying and spray drying. Without wishing to be bound by theory we believe that this is caused by the formation of hydrogen bonds between adjacent cell walls during dehydration and the detachment of these bonds during rehydration has slow kinetics.

When preparing the cell wall clusters of the invention care has to be taken that the cell walls are not pressed together before reaching the dried state. It was surprisingly found that even though the material is compressed, to obtain the required volumetric mass density, the compression does not result in tight bonds between adjacent cell walls and thus not affect the ability to rehydrate and act as a structurant in a prepared ready-to-eat food product. The compression may even aid the ability to rehydrate of the cell wall clusters of the invention.

The plant parenchymal cell wall clusters of the invention can suitably be prepared from plant material. The plant material is provided in the required size of the plant parenchymal cell wall clusters, like for example pieces of one or more plant cells, using suitable methods as known in the art including cutting in to the required size, cooking or enzyme treatment to break down the middle lamella, mechanical shear or a combination thereof. This is followed by a washing step with water and/or a solvent like ethanol to remove at least part of the soluble material to provide for the desired amount of cell wall derived polysaccharides. The so obtained material is subsequently dried taking care to avoid the cell walls being pressed together. Suitable drying methods include quench freezing, followed by freeze drying; and supercritical drying as described in more detail herein below. The so obtained material is then subjected to a compaction step to obtain the required volumetric mass density using suitable methods known in the art, including a tablet press or compacting the material by hand.

For consumer appeal it may be preferred that the preparation of the invention has a 'naturalistic shape' that mimics the shape of natural ingredients like beans or pieces of herbs. Depending on the source of the plant parenchymal cells it may be preferred to use food coloring to enhance the 'naturalistic impression' of the clusters. Such can for example be achieved by pressing the material into a sheet and subsequently forming (e.g. by cutting) the desired shape like for example strips to mimic pieces of vegetables.

### Use as a structurant

The preparation can be used as a structurant in an instant dry food product to structure the prepared ready-to-eat food product made from the instant dry food product. The cell wall clusters of the invention act as a thickener wherein the rehydrated 'intact parenchymal plant cell walls' and/or 'plant parenchymal cell wall fragments' structure by space filling. The so obtained texture is also known as a 'pulpy texture. Therefore, the invention also concerns the use of the preparation of the invention as a structurant in instant dry food products. Preferably as a structurant to thicken, even more preferably to impart a pulpy texture to, the prepared ready-to-eat food product made with the instant dry food product.

Contrary to some known thickeners that need a specific pH or are sensitive to a specific pH, the structuring capability of the preparation of the invention is not positively or negatively influenced by pH and can thus be used over a broad pH range. In addition the present invention allows rehydration for a broad range of temperatures, is fast acting without the requirement of extensive shear, is less susceptible for lump formation - as for example some starches under certain conditions, and is not very salt or sugar sensitive. As such it is therefore very useful as an ingredient in instant dry food products.

### Instant dry food product

The invention thus also concerns an instant dry food product comprising the preparation of the invention, wherein the instant dry food product comprises up to 20 wt% of water and has a water activity (Aw) of less than 0.5.

Preferably, the instant dry food product comprises up to 18, more preferably up to 15 and still more preferably up to 12 wt% of water. Preferably, the instant dry food product has a water activity (Aw) of less than 0.45, preferably less than 0.4 and more preferably less than 0.35.

Instant dry food products are a well known format in the food industry. These include both savory and sweet food products. Savory examples include soup, sauce and gravy mixes. Sweet examples include sauce and desserts like pudding. To obtain a ready-to-eat food product the mix needs to be rehydrated by combining it with water. Preferably the instant dry food product is a soup or sauce. Preferably the instant dry food product is a savory food product.

Such instant dry food products can comprise salt (i.e. sodium chloride), sugar, flavors, dried herbs and/or vegetables, oil and/or fat, protein, preservatives and/or coloring agents. Preferably the instant dry food product comprises sodium chloride, more preferably in an amount of 0.1 to 20 wt%, even more preferably 1 to 15 wt% and still even more preferably 2 to 10 wt% calculated for total amount of sodium on total amount of product.

### Method for preparing a food product

The invention also concerns a method for preparing a food product comprising combining the instant dry food product of the invention with an aqueous liquid, wherein the aqueous liquid has a temperature of at least 0 degrees Celsius.

The cell wall clusters of the invention allow for rehydration for a broad range of temperatures and as such are not restricted to high(er) temperature applications. It can thus for example also be used for an instant dry food mix to prepare a cold soup or cold sauce.

Preferably the aqueous liquid has a temperature between 5 and 100, more preferably between 10 and 80 and even more preferably between 15 and 60 degrees Celsius.

The invention further comprises a method for structuring a liquid food product comprising the use of the preparation of the invention as a structurant. This is a convenient way to thicken food products, like e.g. orange juice, tea or soup, to aid people who have difficulty in swallowing (i.e. dysphagia).

### Description of figures

Figures 1A and B: Scanning Electron Microscopy images of a surface view (a) and a cross section view (b, cut with razor blade) of a tablet.
Figures 2A to D: Rehydrated material was imaged using confocal laser scanning microscopy, using the dye Congo Red as fluorescent dye of the cell wall material. Images have a horizontal field of view of 1.8 mm. Images show background as white and cell wall material in grey and black.

The invention is now illustrated by the following non-limiting examples.

### Examples

### Standard Rehydration Method

The rehydration behavior was assessed using the following method.

A laboratory vial (container 125 ml PP na H74, straight, diameter 52 mm, VWR International, Radnor, PA USA) is filled with 32.8 gram tap water at room temperature. A magnetic stirring bar is added (Cylindric stirring bar, plain economy, 40x8mm, VWR International, Radnor, PA USA). The sample is stirred with a magnetic stirring device at low speed (80rpm). Then an amount of 0.50 gram of material is added (t=0 seconds). After 60 seconds (t=60 seconds), the stirrer is stopped and the resulting mixture evaluated.

### Particle size of rehydrated material

The particle size distribution was measured using the following method.

The laser-based static light scattering instrument Mastersizer 2000 (Malvern Instruments; software: Mastersizer 2000) is used. The refractive indices for material and dispersant (demi-water) are set to 1.425 and 1.330 respectively.

The particle size distribution is characterized with a d (0.9) parameter, indicating the particle size value separating the lower 90% of the particle sizes (volume weighted) from the upper 10% of the particle sizes.

Particle size distribution is further characterized with a d (0.1) parameter, indicating the particle size value separating the lower 10% of the particle sizes (volume weighted) from the upper 90% of the particle sizes.

Both d(0.1) and d(0.9) are automatically reported by the software.

### Volumetric Mass Density

The volumetric mass density is determined by the ratio of measured mass and calculated volume (V) wherein the voids inside the particles are included and the voids outside the particles are excluded. Mass is measured with an electronic balance as known in the art. Volume is suitably determined using methods known in the art, thereby excluding external voids. For regular geometries (mathematical shapes) the volume is calculated according to known suitable formulae, for example V = L*Π*d²/4 for cylindrical shapes, where L is the height of the cylinder, and d is the diameter of the cylinder. In case of irregular shapes (e.g. in the case of further comminuted material), the volume is suitably measured with the following method, as known in the art, by volume rendering of serial x-ray tomographs of the particles, thereby including voids inside the particles and excluding voids outside the particles.

### Standard Rheology Protocol

The rheology was determined using the following method.

Before each measurement the samples are homogenized by spoon and deposited directly on the sand blasted bottom plate of the rheometer (TA Instruments AR2000; software: TA Advantage). A 4cm sand blasted top plate is used and the gap is 1 mm. Oscillation at 1 Hz is used. The G' after 5 minutes is reported at a strain within the linear viscoelastic region, typically 0.1 %.

### Standard Specific Surface Area Measurement (S_{BET})

Specific surface area (S_{BET}) is determined according to the multipoint BET method (Brunauer, Emmet and Teller, J. Am. Chem. Soc., 1938, 60, 309) using nitrogen (at 77K) as adsorptive.

### Example 1 (using liquid nitrogen)

Fresh apples (cv Jonagold) in a ripe stage (firm, with a red and green to red and yellow color) were obtained from the supermarket. Cubic particles of approx. 10mm size without skin or core were cut out of the apple. These apple particles were heated in boiling water (about 30 minutes), until particles began to disintegrate into smaller parts upon mild stirring with a spoon. The particles were further disintegrated by shear using a kitchen hand blender for about 1 minute. The resulting slurry was observed to consist of loose cells and small aggregates of cells.

The slurry was centrifuged three times at 5000rpm for 10 minutes (Centrifuge: Sigma 8K, Sigma Laborzentrifugen GmbH, Osterode am Harz, Germany), wherein each time the supernatant was discarded and the pellet was re-suspended in an amount of demineralized water similar to the amount of the discarded supernatant. The resulting re-suspended slurry was dripped into a batch of liquid nitrogen and quench-frozen droplets of the slurry where obtained. This frozen material was stored in a freezer at - 30°C and subsequently freeze-dried. This resulted in a voluminous powder of dried cell wall material being cell wall fragments, single cell particles and small aggregates of cells.

Approx 0.5 grams of this dried cell wall material was compressed in a tablet press (Graseby Specac 530-227, chamber diameter 45mm, height 45mm) using a pressure of 1.5 bar during 25 seconds.

### Example 2 (using supercritical CO2)

Fresh apples (cv Jonagold) in a ripe stage (firm, with a red and green to red and yellow color) were obtained from the supermarket. Cubic particles of approx. 10mm size without skin or core were cut out of the apple. These apple particles were heated in boiling water until particles began to disintegrate into smaller parts upon mild stirring with a spoon. The particles were further disintegrated by shear using a kitchen hand blender for about 1 minute. The resulting slurry was observed to consist of loose cells and small aggregates of cells.

The slurry was rinsed with running tap water, over a nylon sieving cloth (100µm). Then the water was exchanged with ethanol (food grade, 96%), with approx. 300 ml of slurry in 700 ml of ethanol. Ethanol was renewed after 1, 4, and 16 hours. Ethanol was replaced by liquid CO2 (food grade) in a Jumbo Critical Point Dryer Unit (SPI Supplies, West Chester, PA USA) at 10°C and approx. 50 bar, with batches of about 100ml slurry. Liquid CO2 was renewed 9 times in a period of 3 hours, by releasing the free liquid while keeping the pressure, and subsequent refilling with liquid CO2. Then the CO2 was brought in the supercritical state by raising the temperature to 43°C. CO2 was subsequently released while maintaining the temperature, leaving a voluminous powder of dried cell wall material being cell wall fragments, single cell particles and small aggregates of cells.

Approx 0.5 grams of this dried cell wall material was compressed in a tablet press (Graseby Specac 530-227, chamber diameter 45mm, height 45mm) using a pressure of 1.5 bar during 25 seconds. This resulted in a compression to 1.7% of the volume before compression.

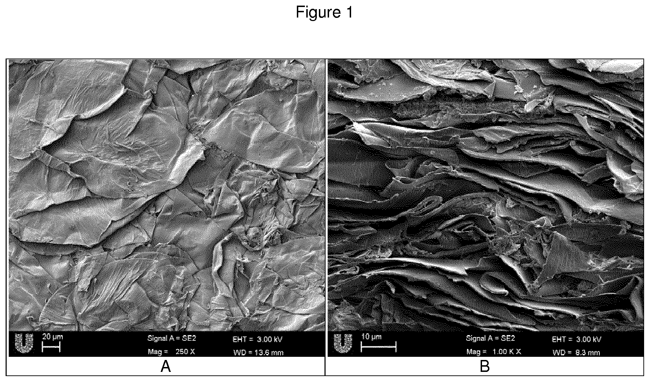

Figures 1A and B are Scanning Electron Microscopy images of a surface view (a) and a cross section view (b, cut with razor blade) of a tablet.

### Example 3

Material was produced according to example 2, with the following exceptions:
- ethanol was used instead of water, using a countercurrent principle;
- supercritical CO2 was used instead of ethanol, using a custom-built 10 liter autoclave, containing 3 liter slurry. Instead of washing with liquid CO2, supercritical CO2 was applied for both washing and drying.

### Example 4 (using supercritical CO2)

Fresh apples (cv Jonagold) in a ripe stage (firm, with a red and green to red and yellow color) were obtained from the supermarket. Cubic particles of approx. 7mm size without skin or core were cut out of the apple. These apple particles were heated in boiling water for 2 minutes. After this heating step, the particles were taken out, and the contained water was exchanged with ethanol (food grade, 96%), with approx. 300 ml of particles in 700 ml of ethanol. Ethanol was renewed after 1, 2, and 3 days. Ethanol was replaced by liquid CO2 (food grade) in a Jumbo Critical Point Dryer Unit (SPI Supplies, West Chester, PA USA) at 10°C and approx. 50 bar, with batches of about 100ml slurry. Liquid CO2 was renewed 9 times in a period of 8 hours, by releasing the free liquid while keeping the pressure, and subsequent refilling with liquid CO2. Then the CO2 was brought in the supercritical state by raising the temperature to 43°C. CO2 was subsequently released while maintaining the temperature, leaving dried cubic particles still with a size of approx. 7mm. These cubes were comminuted in a consumer coffee grinder, for 30 seconds. Approx 0.5 grams of this dried and comminuted cell wall material was compressed in a tablet press (Graseby Specac 530-227, chamber diameter 45mm, height 45mm) using a pressure of 1.5 bar during 25 seconds.

### Example 5

Material was produced according to example 1, with the exception that different plant sources were used as source material, all obtained from a local supermarket:
- Example 5A: Apple (cv Jonagold): prepared as in example 1.
- Example 5B: Winter carrot (having sizes of about 25 cm long, and 4 cm diameter): skin was removed, 10mm sized particles were cut out. These particles were heated in boiling water and further treated like the apple material.
- Example 5C: Leek (having a diameter of about 3cm): roots including basal 20 mm of the leaves was removed. 10mm sized cross-sections were made. Both white and green parts were used, up to a height of about 50cm (as delivered by supermarket). These sections were heated in boiling water and further treated like the apple material.
- Example 5D: Spinach: Intact leaves were heated in boiling water and further treated like the apple material.

The samples were rehydrated according to the Standard Rehydration Method and G' values (1.5 wt%) were measured using the Standard Rheology Protocol

All Samples showed instant rehydration within 60 seconds, resulting in a firm slurry.

**Table 1A, G' values (Pa)**

| | |
|---|---|
| 5A (apple) | 2774 |
| 5B (carrot) | 4022 |
| 5C (leek) | 1256 |
| 5D (spinach) | 397 |

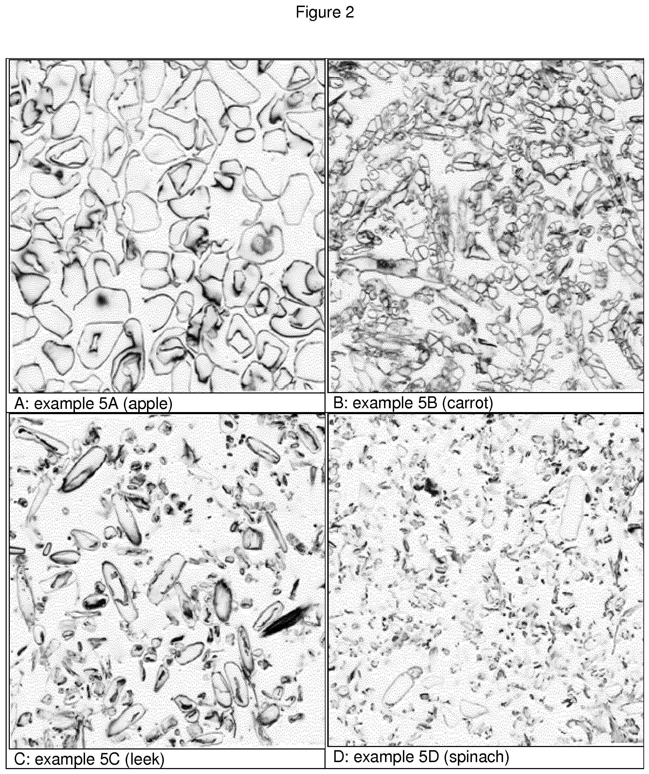

Rehydrated material was imaged using confocal laser scanning microscopy, using the dye Congo Red as fluorescent dye of the cell wall material, see figures 2A to D. Images have a horizontal field of view of 1.8 mm. Images show background as white and cell wall material in grey and black.

**Table 1B, rehydrated particle size distribution**

| | d(0.1) | d(0.9) |
|---|---|---|
| 5A (apple) # | 130 | 590 |
| 5B (carrot) $ | 70 | 500 |
| 5C (leek) # | 40 | 1000 |
| 5D (spinach) # | 30 | 200 |

| | | |
|---|---|---|
| # estimated based on microscopy images; $ measured according to the method described above using the laser-based static light scattering instrument Mastersizer 2000. | | |

Clearly, the mechanism of structuring of a water phase using rehydrated material according to the invention is of the type of space filling, by large cell wall fragments, intact cell walls, and small aggregates of cell walls. The lower G' for spinach seems to relate to the smaller particle sizes, which result in a less efficient space filling.

### Example 6: Specific surface area (S_{BET})

Specific surface area (SBET) was determined for various samples, using the Standard Specific Surface Area Measurement described earlier.

**Table 2, S_{BET} values (m²/gram)**

| | | |
|---|---|---|
| 6A | Material according to the invention, produced according to example 1. | 5.6 |
| 6B | Material as in example 6A, but without compression treatment. | 6.8 |
| 6C | Material according to the invention, produced according to example 2. | 22 |
| 6D | Material as in example 6C, but without compression treatment. | 30 |
| 6E | Spinach cell wall material, according to the invention, produced according to example 5D. | 6.4 |
| 6F | Comparative example: Material produced according to example 1, with the exception that the slurry was frozen in a blast freezer at -30°C instead of frozen with liquid nitrogen. | 2.1 |
| 6G | Comparative example: Commercially obtained plant cell wall material: Citrus fibre Herbacel AQ+ type N (Herbafood, Werder, Germany). | 0.9 |

### Example 7: Bulk densities

Material according to the invention was produced according to example 1, with the exception that the compression was performed in various ways. Aliquots of about 0.4 gram of the non-compressed material were poured into the tablet press (as described in example 1) up to the rim. Samples were either not compressed, compressed using the tablet press described in example 1, or by hand (using the tablet press, pressing by hand instead of the instrument). The resulting material had the shape of a cylinder with a diameter of 45 mm and a varying height depending on the applied pressure. The results are compiled in the table below including the calculated volume and the calculated density.

**Table 3, Density measurements**

| | Pressure treatment | Weight (gram) | Height (mm) | Volume (ml) | Bulk density (gram/ml) |
|---|---|---|---|---|---|
| 7A | not compressed | 0.38 | 45.0 | 71.57 | 0.0053 |
| 7B | by hand | 0.42 | 5.35 | 8.51 | 0.049 |
| 7C | by hand | 0.44 | 2.11 | 3.36 | 0.13 |
| 7D | by tablet press, 1.5 bar, 25 sec | 0.40 | 0.78 | 1.24 | 0.32 |
| 7E | by tablet press, 6.2 bar, 25 sec | 0.43 | 0.43 | 0.68 | 0.62 |

The samples were rehydrated using the Standard Rehydration Method. Samples 7C, 7D, and 7E rehydrated well, resulting in a firm and homogeneous slurry. Sample 7B also rehydrated, but phase separation was observed, with transparent liquid at the bottom, and a turbid mixture on top. Sample 7A did not rehydrate within 1 minute, as large amount of the material was still floating on top of the liquid and phase separation occurred.

### Example 8: Grinded compressed material

A tablet produced according to example 1 was grinded using a coffee grinder. The resulting particles had a similar microstructure and material bulk density (0.55 gram/ml) as the intact tablet. Rehydration performance (according to Standard Rehydration Method) of the grinded tablet was similar to performance of whole tablets.

This example illustrates that the instant rehydration of the invention is maintained when using comminuted tablets, thus dependent on the typical microstructure rather than on macroscopic shape.

### Example 9: pH sensitivity

Material according to the invention was produced according to example 1. Tablets of 0.45 gram were added into 29 gram of aqueous pH buffer liquid, and further treated as described in Standard Rehydration Method. Three pH buffers were tested:
- pH 2: buffer consisting of 0.05M KCL and 0.05M HCL;
- pH 7: AVS TITRINORM pH 7 (VWR International, Radnor, PA USA): Potassium dihydrogen phosphate/di-Sodium hydrogen phosphate;
- pH 10: AVS TITRINORM pH 10 (VWR International, Radnor, PA USA): boric acid/sodium hydroxide/potassium chloride.

Within 1 minute after addition of the tablets, all three samples obtained a G' (according to Standard Rheology Protocol) of above 1000 Pa.

For already prepared mixtures, prepared as earlier described in the Standard Rehydration Method, it was also observed that adjusting pH, ranging from pH 2 to pH 10 using either concentrate HCL or concentrated NaOH , did not cause a major change in consistency of the mixture.

This shows that the structuring capability of the material of the invention is independent of the pH.

### Example 10: salt/sugar sensitivity

Material according to the invention was produced according to example 4. Tablets of around 0.5 gram were weighed and rehydrated in demineralised water with the addition of either salt (NaCL) or sugar (Sucrose) at levels of 1% and 25%.
Amount of tablet was 1.5%, calculated as weight percentage of [water + tablet]. Salt/Sugar percentage was calculated as weight percentage of [water + Salt/sugar], so percentage of tablet on amount of pure water was similar for all samples.

All resulting suspensions had a firm consistency, comparable with the consistency of commercial apple sauce or ketchup, with the 25% samples being less thick than the 1% samples.

Furthermore, for already prepared mixtures, prepared as described Standard Rehydration Method, it was also observed that adding salt or sugar, either to a concentration of 1% or 25%, did yield consistencies similar to samples where the salt or sugar was added before adding the tablet.

This shows that water with a wide range of salt and sugar concentrations can be structured with the material of the invention.

### Example 11: Temperature sensitivity

Rehydration of material produced according to example 1 was performed at different temperatures: 0, 23 and 100°C.

All three samples showed quick rehydration within 60 seconds, resulting in a firm, homogeneous slurry.

This shows that the material of the invention can be applied to structure water at a wide range of temperatures.

### Example 12: Cream Soup Base

Sample 12A: A reference cream soup base was made from the following ingredients:
- 30 gram wheat flour (thickener);
- 500 gram milk (1.5% fat);
- 125 gram butter;
- 1 cube of Chicken bouillon (knorr kippen bouillontabletten).

Preparation was as follows:
1. The butter was melted;
2. The flour was added and stirred through;
3. The milk and the bouillon tablet were added;
4. The mixture was cooked while stirring until a thickened soup base was obtained.

Sample 12B: A cream soup base was made from similar ingredients as in Sample 12A, but the thickener was replaced by 7.5 gram of material according to the invention as prepared in Example 8.

Preparation was as follows:
1. The material of the invention was stirred into the milk by stirring with a spoon for 20 seconds;
2. This mixture was heated and the butter and bouillon cube were added while gently stirring with a spoon until the butter was melted and the bouillon cube was dispersed.

Both 12A and 12B resulted in base with a consistency expected for a thickened soup. Both bases were tasted. The base according to the invention (12B) was perceived as providing a good mouth feel and in addition as being pulpier and less sticky than the reference base (12A).

Example 12 illustrates that the preparation of plant parenchymal cell wall clusters according to the invention reduces the time required for preparing a cream soup base as there is no need to activate the thickener by cooking the flour (i.e. gelatinization of starch).

It was further noticed that the reference base (12A) resulted in fouling material in the pan that was notably absent in the pan used for preparing the base according to the invention (12B).

## Claims

1. Preparation of plant parenchymal cell wall clusters, the cell wall clusters comprising at least 60 wt% of cell wall derived polysaccharides, the cell wall clusters having a
a. volumetric mass density of at least 0.1 gram/ml;
b. S_{BET} of at least 3 m²/gram; and
c. rehydrated particle size having a d(0.1) value higher than 20 micrometer and a d(0.9) value lower than 1500 micrometer;
wherein the preparation comprises up to 20 wt% of water and has a water activity (Aw) of less than 0.5.

2. Preparation according to claim 1 wherein the cell wall clusters have a volumetric mass density of at least 0.2, preferably at least 0.3, more preferably at least 0.4 and even more preferably at least 0.5 gram/ml.

3. Preparation according to claim 1 or claim 2 wherein the cell wall clusters have a S_{BET} of at least 4, preferably at least 6, more preferably at least 10 and even more preferably at least 20 m²/gram.

4. Preparation according to any one of claims 1 to 3 wherein the cell wall clusters have a S_{BET} of at most 3000, preferably at most 1000, more preferably at most 100 and even more preferably at most 50 m²/gram.

5. Preparation according to any one of claims 1 to 4 wherein the cell wall clusters have a rehydrated particle size having a d(0.1) value higher than 30, preferably higher than 40, more preferably higher than 50 and even more preferably higher than 70 micrometer.

6. Preparation according to any one of claims 1 to 5 wherein the cell wall clusters have a rehydrated particle size having a d(0.9) value lower than 1400, preferably lower than 1200, more preferably lower than 1000, even more preferably lower than 800 and still more preferably lower than 500 micrometer.

7. Preparation according to any one of claims 1 to 6 wherein the preparation comprises up to 18, preferably up to 15 and more preferably up to 12 wt% of water.

8. Preparation according to any one of claims 1 to 7 wherein the preparation has a water activity (Aw) of less than 0.45, preferably less than 0.4 and more preferably less than 0.35.

9. Preparation according to any one of claims 1 to 8 wherein the cell wall clusters are obtained from apple, onion, leek, pear, peach, pumpkin, potato, carrot, sugar beet, tomato, citrus or combinations thereof.

10. Instant dry food product comprising the preparation according to any one of claims 1 to 9, wherein the instant dry food product comprises up to 20 wt% of water and has a water activity (Aw) of less than 0.5.

11. Instant dry food product according to claim 10 further comprising sodium chloride, preferably in an amount of 0.1 to 20 wt%, more preferably 1 to 15 wt% and even more preferably 2 to 10 wt% calculated for total amount of sodium on total amount of product.

12. Instant dry food product according to claim 10 or claim 11 wherein the food product is a soup or sauce.

13. Method for preparing a food product comprising combining the instant dry food product of any one of claims 10 to 12 with an aqueous liquid, wherein the aqueous liquid has a temperature of at least 0, preferably between 5 and 100, more preferably between 10 and 80 and even more preferably between 15 and 60 degrees Celsius.

14. Method for structuring a liquid food product comprising the use of any one of claims 1 to 9 as a structurant.

15. Use of the preparation according to any one of claims 1 to 9 as a structurant in instant dry food products.

## Patentansprüche

1. Zubereitung pflanzlicher parenchymaler Zellwand-Cluster, wobei die Zellwand-Cluster mindestens 60 Gew.-% aus der Zellwand stammende Polysaccharide umfassen, und die Zellwand-Cluster haben: Eine
a. volumetrische Massendichte von mindestens 0,1 g/ml;
b. S_{BET} von mindestens 3 m²/g; und
c. rehydratisierte Partikelgröße mit einem d(0,1)-Wert größer als 20 Mikrometer und einem d(0,9)-Wert niedriger als 1500 Mikrometer;
wobei die Zubereitung bis zu 20 Gew.-% Wasser umfasst und eine Wasseraktivität (Aw) von weniger als 0,5 hat.

2. Zubereitung nach Anspruch 1, wobei die Zellwand-Cluster eine volumetrische Massendichte von mindestens 0,2, bevorzugt von mindestens 0,3, besonders bevorzugt von mindestens 0,4 und ganz besonders bevorzugt von mindestens 0,5 g/ml haben.

3. Zubereitung nach Anspruch 1 oder 2, wobei die Zellwand-Cluster einen S_{BET} von mindestens 4, bevorzugt von mindestens 6, besonders bevorzugt von mindestens 10 und ganz besonders bevorzugt von mindestens 20 m²/g haben.

4. Zubereitung nach irgendeinem der Ansprüche 1 bis 3, wobei die Zellwand-Cluster einen S_{BET} von höchstens 3000, bevorzugt von höchstens 1000, besonders bevorzugt von höchstens 100 und ganz besonders bevorzugt von höchstens 50 m²/g haben.

5. Zubereitung nach irgendeinem der Ansprüche 1 bis 4, wobei die Zellwand-Cluster eine rehydratisierte Partikelgröße mit einem d(0,1)-Wert größer als 30, bevorzugt größer als 40, besonders bevorzugt größer als 50 und ganz besonders bevorzugt größer als 70 Mikrometer haben.

6. Zubereitung nach irgendeinem der Ansprüche 1 bis 5, wobei die Zellwand-Cluster eine rehydratisierte Partikelgröße mit einem d(0,9)-Wert kleiner als 1400, bevorzugt kleiner als 1200, besonders bevorzugt kleiner als 1000, ganz besonders bevorzugt kleiner als 800 und noch bevorzugter kleiner als 500 Mikrometer haben.

7. Zubereitung nach irgendeinem der Ansprüche 1 bis 6, wobei die Zubereitung bis zu 18, bevorzugt bis zu 15 und besonders bevorzugt bis zu 12 Gew.-% Wasser umfasst.

8. Zubereitung nach irgendeinem der Ansprüche 1 bis 7, wobei die Zubereitung eine Wasseraktivität (Aw) von weniger als 0,45, bevorzugt von weniger als 0,4 und besonders bevorzugt von weniger als 0,35 hat.

9. Zubereitung nach irgendeinem der Ansprüche 1 bis 8, wobei die Zellwand-Cluster aus einem Apfel, einer Zwiebel, einem Lauch, einer Birne, einem Pfirsich, einem Kürbis, einer Kartoffel, einer Karotte, einer Zuckerrübe, einer Tomate, einem Zitrusgewächs oder einer Kombination davon erhalten wird.

10. Fertigtrockennahrungsmittelprodukt, umfassend die Zubereitung nach irgendeinem der Ansprüche 1 bis 9, wobei das Fertigtrockennahrungsmittelprodukt bis zu 20 Gew.-% Wasser umfasst und eine Wasseraktivität (Aw) von weniger als 0,5 hat.

11. Fertigtrockennahrungsmittelprodukt nach Anspruch 10, darüber hinaus umfassend Natriumchlorid, bevorzugt in einer Menge von 0,1 bis 20 Gew.-%, besonders bevorzugt von 1 bis 15 Gew.-% und ganz besonders bevorzugt von 2 bis 10 Gew.-%, berechnet für die Gesamtmenge Natrium in der Gesamtmenge des Produktes.

12. Fertigtrockennahrungsmittelprodukt nach Anspruch 10 oder 11, wobei das Nahrungsmittelprodukt eine Suppe oder Sauce ist.

13. Verfahren zur Herstellung eines Nahrungsmittelproduktes, umfassend das Mischen des Fertigtrockennahrungsmittelproduktes irgendeines Anspruches 10 bis 12 mit einer wässrigen Flüssigkeit, wobei die wässrige Flüssigkeit eine Temperatur von mindestens 0, bevorzugt zwischen 5 und 100, besonders bevorzugt zwischen 10 und 80 und ganz besonders bevorzugt zwischen 15 und 60 Grad Celsius hat.

14. Verfahren zur Strukturierung eines flüssigen Nahrungsmittelproduktes, umfassend die Verwendung irgendeines der Ansprüche 1 bis 9 als Strukturierungsmittel.

15. Verwendung der Zubereitung nach irgendeinem der Ansprüche 1 bis 9 als Strukturierungsmittel in Fertigtrockennahrungsmittelprodukten.

## Revendications

1. Préparation d'amas de parois de cellules parenchymatales de plantes, les amas de parois de cellules comprenant au moins 60 % en masse de parois de cellules dérivées de polysaccharides, les amas de parois de cellules ayant une
a. densité de masse volumétrique d'au moins 0,1 gramme/ml ;
b. S_{BET} d'au moins 3 m²/gramme ; et
c. une taille de particule réhydratée ayant une valeur d(0,1) supérieure à 20 micromètres et une valeur d(0,9) inférieure à 1 500 micromètres,
dans laquelle la préparation comprend jusqu'à 20 % en masse d'eau et présente une activité d'eau (Aw) inférieure à 0,5.

2. Préparation selon la revendication 1, dans laquelle les amas de parois de cellules présentent une densité de masse volumétrique d'au moins 0,2, de préférence d'au moins 0,3, encore mieux d'au moins 0,4 et bien mieux encore d'au moins 0,5 gramme/ml.

3. Préparation selon la revendication 1 ou la revendication 2, dans laquelle les amas de parois de cellules présentent un S_{BET} d'au moins 4, de préférence d'au moins 6, encore mieux d'au moins 10 et bien mieux encore d'au moins 20 m²/gramme.

4. Préparation selon l'une quelconque des revendications 1 à 3, dans laquelle les amas de parois de cellules présentent un S_{BET} d'au plus 3 000, de préférence d'au plus 1 000, encore mieux d'au plus 100 et bien mieux encore d'au plus 50 m²/gramme.

5. Préparation selon l'une quelconque des revendications 1 à 4, dans laquelle les amas de parois de cellules présentent une taille de particule réhydratée ayant une valeur d(0,1) supérieure à 30, de préférence supérieure à 40, encore mieux supérieure à 50, et bien mieux encore supérieure à 70 micromètres.

6. Préparation selon l'une quelconque des revendications 1 à 5, dans laquelle les amas de parois de cellules présentent une taille de particule réhydratée ayant une valeur d(0,9) inférieure à 1 400, de préférence inférieure à 1 200, encore mieux inférieure à 1 000, bien mieux encore inférieure à 800 et particulièrement de préférence supérieure à 500 micromètres.

7. Préparation selon l'une quelconque des revendications 1 à 6, dans laquelle la préparation comprend jusqu'à 18, de préférence jusqu'à 15 et encore mieux jusqu'à 12 % en masse d'eau.

8. Préparation selon l'une quelconque des revendications 1 à 7, dans laquelle la préparation présente une activité d'eau (Aw) inférieure à 0,45, de préférence inférieure à 0,4 et encore mieux inférieure à 0,35.

9. Préparation selon l'une quelconque des revendications 1 à 8, dans laquelle les amas de parois de cellules sont obtenus à partir de pomme, d'oignon, de poireau, de poire, de pêche, de potiron, de pomme de terre, de carotte, de betterave à sucre, de tomate, d'agrume ou de combinaisons de ceux-ci.

10. Produit alimentaire sec instantané comprenant la préparation selon l'une quelconque des revendications 1 à 9, dans lequel le produit alimentaire sec instantané comprend jusqu'à 20 % en masse d'eau et présente une activité d'eau (Aw) inférieure à 0,5.

11. Produit alimentaire sec instantané selon la revendication 10, comprenant de plus du chlorure de sodium, de préférence dans une quantité de 0,1 à 20 % en masse, encore mieux de 1 à 15 % en masse et bien mieux encore de 2 à 10 % en masse calculés pour une quantité totale de sodium sur la quantité totale de produit.

12. Produit alimentaire sec instantané selon la revendication 10 ou la revendication 11, dans lequel le produit alimentaire est une soupe ou une sauce.

13. Procédé de préparation d'un produit alimentaire comprenant la combinaison du produit alimentaire sec instantané selon l'une quelconque des revendications 10 à 12 avec un liquide aqueux, dans lequel le liquide aqueux présente une température d'au moins 0, de préférence de 5 à 100, encore mieux de 10 à 80 et bien mieux encore de 15 à 60 degrés Celsius.

14. Procédé pour la structuration d'un produit alimentaire liquide comprenant l'utilisation selon l'une quelconque des revendications 1 à 9 comme un structurant.

15. Utilisation de la préparation selon l'une quelconque des revendications 1 à 9 comme un structurant dans des produits alimentaires secs instantanés.
